# EUROPÄISCHE PATENTSCHRIFT

(11) **EP 2 462 328 B1**
(45) Veröffentlichungstag und Bekanntmachung des Hinweises auf die Patenterteilung: **03.07.2013**
(21) Anmeldenummer: 10744510.8
(22) Anmeldetag: 03.08.2010
(51) Int. Cl.: F02B 21/00, F02D 13/02, F02B 33/44, F02B 37/04, F02N 11/04, F02B 29/00

(54) **TURBOAUFGELADENE HUBKOLBENKRAFTMASCHINE MIT ANGESCHLOSSENEM DRUCKTANK ZUR TURBOLOCHÜBERBRÜCKUNG UND VERFAHREN ZUM BETRIEB DERSELBEN**
TURBOCHARGED RECIPROCATING PISTON ENGINE HAVING A CONNECTED PRESSURE TANK FOR BRIDGING TURBO LAG, AND METHOD FOR OPERATING SAID ENGINE
MOTEUR À COMBUSTION INTERNE À PISTON ÉLÉVATEUR SURALIMENTÉ PAR TURBOSOUFFLANTE AVEC RÉSERVOIR DE PRESSION RACCORDÉ POUR LE RECOUVREMENT DU TROU TURBO ET PROCÉDÉ POUR LE FONCTIONNEMENT DU MOTEUR

(30) Priorität: 03.08.2009 EP 09009995; 10.09.2009 CH 14092009
(43) Veröffentlichungstag der Anmeldung: 13.06.2012
(73) Patentinhaber: ETH Zurich, 8092 Zurich (CH)
(72) Erfinder: DÖNITZ, Christian, 88677 Markdorf (DE); GUZZELLA, Lino, CH-8610 Uster (CH); ONDER, Christopher H., CH-8484 Weisslingen (CH); VOSER, Christoph, CH-8050 Zürich (CH)
(74) Vertreter: Rentsch Partner AG
(86) Internationale Anmeldenummer: PCT/EP2010/004733
(87) Internationale Veröffentlichungsnummer: WO 2011/015336

(56) Entgegenhaltungen:
- WO-A1-2005/113947
- WO-A1-2009/036992
- FR-A1- 2 865 769
- FR-A1- 2 901 846
- GB-A- 2 402 169
- JP-A- 5 157 008
- DÖNITZ C ET AL: "Realizing a Concept for High Efficiency and Excellent Driveability: The Downsized and Supercharged Hybrid Pneumatic Engine", SAE TECHNICAL PAPER SERIES, SOCIETY OF AUTOMOTIVE ENGINEERS, WARRENDALE, PA, US, Nr. 2009-01-1326, 1. April 2009 (2009-04-01), Seiten 1-15, XP002577055, ISSN: 0148-7191 in der Anmeldung erwähnt

## Beschreibung

### Fachgebiet der Erfindung

Die vorliegende Erfindung bezieht sich auf einen verbesserten aufgeladenen Verbennungsmotor, der auf Viertaktbasis arbeitet und zum Zweck der Turbolochüberbrückung einen Drucklufttank aufweist.

### Hintergrund der Erfindung

Hubkolbenkraftmaschinen wurden vor mehr als 100 Jahren erfunden und wurden seither ständig weiterentwickelt, jedoch sind ihrem maximalen Wirkungsgrad thermodynamische Grenzen gesetzt. Wenn eine Hubkolbenkraftmaschine stets an ihrem maximalen Wirkungsgrad betrieben würde, würde weltweit etwa nur halb soviel Kraftstoff verbrannt werden wie es heute tatsächlich der Fall ist. Der Hauptgrund für die ineffiziente Nutzung von heutigen Hubkolbenkraftmaschinen ist, dass der Motor meist nur in Teillast (Stadtverkehr, konstante Geschwindigkeiten, ...) betrieben wird, dort sind die Wirkungsgrade schlecht. Da Autofahrer Fahrzeuge mit einer hohen Maximalleistung fordern, resultiert ein hoher Anteil an Teillastbetrieb und somit relativ hohe Kraftstoffverbräuche.

Das einfachste und kostengünstigste Lösungskonzept für dieses Problem ist die Verwendung von Hubkolbenkraftmaschinen mit geringerem Hubvolumen, da diese in den meisten Fahrsituationen einen hohen Wirkungsgrad aufweisen. Damit der Maximalleistungswunsch der Autofahrer berücksichtigt wird, kann diese kleine Hubkolbenkraftmaschine mit Hilfe eines abgasenthalpienutzenden Turboladers aufgeladen werden, damit kann die Leistung einer Hubkolbenkraftmaschine mit doppelt so grossem Hubvolumen erreicht werden ohne die erzielten Wirkungsgradgewinne im beschriebenen Lastbereich wieder opfern zu müssen.

Dieses Konzept ist einfach und kostengünstig und wird auch teilweise bereits angewendet von Automobilfirmen. Allerdings gibt es bei diesem Konzept - speziell wenn angewendet auf Benzinmotoren, bei Dieselmotoren ist es Standard - einen Grund warum es selten eingesetzt wird: das sogenannte "Turboloch": Bei verlangten Beschleunigungen des Fahrers bei niedrigen Drehzahlen der aufgeladenen Hubkolbenkraftmaschine fehlt Luft im aufgeladenen System, was in einem schlechten Ansprechverhalten resultiert.

Durch das Anschließen eines Drucklufttanks an die Zylinder (=Brennkammern) kann dieses Problem behoben werden: Wenn vom Fahrer ein hohes Drehmoment gefordert wird, kann durch Öffnen des Ladeventils zusätliche Luft direkt (!) in die Brennkammern eingebracht werden, zusätzlich zur Luft, die bereits über die Einlassventile eingebracht wurde. Diese zusätzliche Luft ermöglicht es, mehr Kraftstoff für den entsprechenden Zyklus (die 4 Takte der Hubkolbenkraftmaschine: Einsaugen von Frischgas - Kompression - Verbrennung / Expansion - Ausstoß der verbrannten Gase) einzuspritzen. Dadurch entsteht nicht nur augenblicklich ein höheres Drehmoment für die Verbrennung sondern ein erhöhter Abgasenthalpiestrom, der die Turbine und damit auch den Kompressor des Turboladers antreibt. Der Kompressor verdichtet somit mehr Luft auf ein höheres Druckniveau. Der erhöhte Druck auf der Einlassseite der Hubkolbenkraftmaschine führt dazu, dass während des Einlassvorgangs mehr Luft in die Hubkolbenkraftmaschine kommt, womit der "Teufelskreis der fehlenden Luft" (Motor produziert zunächst wenig Drehmoment; produziert dadurch wenig Abgasenthalpie; dadurch wird der Turbolader nicht genug angetrieben; der Kompressor des Turboladers fördert wenig Frischluft; dadurch gelangt nur eine begrenzte Luftmasse in die Brennkammern; so kann man nur eine begrenzte Kraftstoffmenge einspritzen und folglich nur wenig Drehmoment erzeugen; ...) durchbrochen ist. Dadurch wird die zusätzlich eingebrachte Luft vom Drucklufttank nur für einen kurzen Zeitraum notwendig. Sobald der Turbolader hohe Drehzahlen erreicht hat, liefert dieser ausreichend Luft für die Produktion des maximalen Drehmoments.

Das Anschließen eines Drucktanks an die Brennkammern einer Hubkolbenkraftmaschine (im folgenden "pneumatische Hybridisierung" genannt) dient in vielen Patenten und wissenschaftlichen Publikationen dem Zweck, dass man Energie, die beim Bremsen verfügbar wird und in konventionellen Fahrzeugbremsen dissipiert wird, rekuperieren kann durch Pumpen und Speichern von Luft in den Drucklufttank (ohne die Einbringung von Kraftstoff). Diese Druckluft kann zu einem anderen Zeitpunkt eingesetzt werden, in dem die Hubkolbenkraftmaschine ausschließlich von Luft angetrieben wird (ohne die Einbringung von Kraftstoff). So wird auch ein pneumatischer Start ermöglicht. Diese Vorteile sind jedoch zweitrangig, wie umfangreiche Untersuchungen gezeigt haben (Veröffentlichungsliste auf www.hpe.ethz.ch). Das im vorherigen Abschnitt beschriebene Konzept ist verantwortlich für eine Kraftstoffersparnis von etwa 25%, während die in diesem Abschnitt beschriebenen Vorteile die Ersparnis lediglich insgesamt auf etwa 32% anheben. Die vorliegende Erfindung konzentriert sich somit auf die pneumatische Hybridisierung zur Überbrückung des Turbolochs.

Übersicht relevanter bestehender Patente zum Stand der Technik im Bereich der pneumatischen Hybridisierung, zeitlich geordnet von alt nach neu:

US1013528 ist das erste Patent über einen pneumatischen Hybridmotor. Hier wird eine Hubkolbenkraftmaschine zusätzlich als Druckluft-Expansionsmotor verwendet. Der pneumatische Motorstart wird ebenfalls beschrieben. Der Drucklufttank wird aufgeladen sobald zwei Zylinder verbrennen und zwei Zylinder pumpen, ein Aufladen des Tanks durch Ausnutzen der beim Bremsen freiwerdenden Energie ist nicht vorgesehen.

US3765180 beschreibt ebenfalls eine Hubkolbenkraftmaschine die sowohl als Verbrennungsmotor als auch als pneumatischer Motor betrieben werden kann. Für die Erzeugung von Druckluft wird ein externer elektrischer Kompressor verwendet.

US3963379 basiert teilweise auf US 1013528, jedoch kann hier die Bremsenergie zur Erzeugung von Druckluft (Pumpen im Zweitaktzyklus) verwendet werden. Das Patent sieht axial verstellbare Nockenwellenprofile für alle Einlass-, Auslass- und Ladeventile vor, die den Betrieb als Verbrennungsmotor, Pumpe und pneumatischen Motor ermöglichen. Das Ladeventil wird dabei stets über eines von drei Nockenprofilen angesteuert: ein Nullnocken, der das Ventil geschlossen hält, ein Doppelnocken für den Zweitakt-Pumpzyklus und einen Einfachnocken für den Motorstart, der das Ladeventil dann öffnet wenn im Verbrennungszyklus der Expansions- bzw. Verbrennungstakt stattfinden würde. Die beschriebene Hubkolbenkraftmaschine funktioniert ausserdem in beiden Drehrichtungen.

US5529549 ist das erste Patent für einen pneumatischen Hybridmotor in dem die Verwendung eines Motorsteuergeräts vorgesehen ist zur Ansteuerung der Ventile auf Basis von Sensorsignalen. Das Patent beschreibt zudem (als erstes Patent) einen "supercharged" Modus, der für diesen (nicht aufgeladenen) Motor möglich ist. Dabei wird ausschließlich Luft vom Drucktank zur Befüllung des Motors verwendet, es wird keine Luft aus der Umgebung (normaler Einlasspfad) verwendet, der Kraftstoff wird direkt in die Brennkammer eingespritzt. Somit kann mehr Luft in den Zylinder gelangen und mehr Kraftstoff kann eingespritzt werden verglichen mit einem normalen Verbrennungsmotor. Die Konstruktion sieht steuerbare Ventile vor, die den Einlasskanal entweder mit Druckluft, mit dem Einlasspfad (von Umgebung) oder gar nicht verbindet, somit existiert ein Volumen, das vom Einlasspfad und vom Hochdruckpfad auf dem Weg zur Brennkammer abwechselnd benutzt werden. Der Motor sieht zudem einen Pneumatikmotor Modus, einen normalen Verbrennungsmodus, einen Pump Modus, sowie einen Zylinderdeaktivierungsmodus vor. Für den Motor ist keine fluiddynamische Vorrichtung zur Aufladung des Motors vorgesehen.

GB2402169 beschreibt eine Hubkolbenkraftmaschine, die neben dem Verbrennungsmodus zusätzlich einen Pump Modus und einen Pneumatikmotor Modus ermöglicht (Zweitakt- und Viertaktmodi). Für den Pneumatikmotor Modus wird ein Verfahren beschrieben, bei dem die expandierte Luft zum Einlass hinausgeschoben wird damit die Luft keine Probleme für den Katalysatorbetrieb verursacht. Sämtliche Ventile werden vollvariabel (elektrohydraulisch) angesteuert und ermöglichen, dass verschiedene Zylinder in unterschliedlichen Modi betrieben werden. Zudem wird beschrieben, was in wissenschaftlichen Publikation auch "air power assist (APA) mode" bezeichnet wird. Während eines Einlasstakts wird zuerst Luft über das Einlassventil eingebracht und während desselben Einlasstakts wird danach Luft aus dem Drucktank hinzugefügt.

FR2865769A1 beschreibt eine, mit einem Turbolader aufgeladene, Hubkolbenkraftmaschine bei der die pneumatische Hybridisierung zur Überbrückung des Turbolochs verwendet wird. Der dazu verwendete "supercharged" Modus unterscheidet sich hierbei von dem "supercharged" Modus in US5529549 dadurch, dass der Einlasspfad und der Drucktankpfad kein Volumen auf dem Weg zur Brennkammer gemeinsam nutzen. Ausserdem wird hier zunächst Luft aus dem Einlass gebracht und danach Luft aus dem Drucktank. Im Gegensatz zu GB2402169 wird die Luft aus dem Drucktank dabei nicht während des Einlasstakts, sondern während der Kompressionsphase des Zylinders eingebracht. Es werden vollvariable Ventilsteuerungen für alle Ventile verwendet, so werden Pneumatikmotor Modus und Pump Modus jeweils im Zweitaktverfahren ermöglicht.

WO2009/036992 beschreibt wie FR2865769A1 eine, mit einem Turbolader aufgeladene, Hubkolbenkraftmaschine, bei der der Drucklufttank direkt mit den Brennkammern mit Hilfe von vollvariablen, vorzugsweise elektrohydraulisch angesteuerten Ladeventilen, verbunden ist. Die Einlass- und Auslassventile werden dagegen über Nockenwellen angetrieben, die stets dasselbe Hubprofil bei jedem Viertaktzyklus aufweisen. Somit können Pump Modus und Pneumatikmotor Modus im Viertaktverfahren betrieben werden. Zudem dient das Ladeventil dazu, den "supercharged" Modus analog zu FR2865769A1 zu ermöglichen um das Turboloch zu überbrücken. In einer weiteren Ausführung wird neben einem Drucklufttank ein Abgasdrucktank verwendet. Der Abgastank wird für einen neuen Verbrennungszyklus verwendet, bei dem am Ende der Expansion verbrannte Gase in den Abgastank übergeführt werden. Die unter Druck stehenden Abgase können verwendet werden für einen Pneumatikmotor Modus im Vertaktverfahren.

### Detaillierte Beschreibung

Die Erfindung zielt auf den wichtigsten Vorteil der pneumatischen Hybridisierung von Hubkolbenkraftmaschinen ab, der bereits oben beschrieben wurde: Die substantielle Verkleinerung des Hubvolumens einer Hubkolbenkraftmaschine mit Beibehaltung der Nennleistung mit Hilfe eines Turboladers durch die Überbrückung des Turbolochs mittels direkt in eine Brennkammern eingebrachter Druckluft.

Eine hohe Variabilität von Ansteuersystemen von Ventilen stellt eine hohe Hürde dar für Automobilhersteller, da Komplexität und damit Kosten gegenüber einer herkömmlichen Hubkolbenkraftmaschine steigen. In EP 07018673.9 wurde dies gelöst durch Verwendung konventioneller, nichtvariabler Nockenwellen für sämtliche Einlass- und Auslassventile. Die dort immer noch notwendige vollvariable Ladeventilansteuerung wird im vorliegenden Patent umgangen, indem auch für die Ladeventile ein nockenwellenbasiertes System verwendet wird.

In einer ersten Ausführung der Erfindung (Basisausführung, respektive Ausführung 1) wird das Ladeventil mit einem fixen Nockenwellenprofil angesteuert, jedoch besitzt die mechanische Wirkverbindung zwischen der für die Ladeventile zuständige Nockenwelle und dem Ladeventil einen Mechanismus zur schnellen Deaktivierung bzw. Aktivierung (Aktivierungsmechanismus).

Verschiedene Aktivierungsmechanismen auf Basis von Nockenwellensystemen sind kostengünstig und werden in Serienfahrzeugen eingesetzt. So kann der "supercharged" Modus ähnlich zu EP07018673.9 und FR2865769A1 ermöglicht werden. Diese kostengünstige Konfiguration ermöglicht die Überbrückung des Turbolochs in einem aufgeladenen Motor. Sämtliche weiteren Ausführungen sind auf dieser Konfiguration aufgebaut.

Die Turbolochüberbrückung erfordert jedoch besondere Massnahmen, die substanziell für die vorliegende Erfindung sind: Durch das Festlegen eines Hubprofils für den Nocken der das Ladeventils kann die Luftmasse im Zylinder nicht mehr ausreichend durch die Ladeventilsteuerung festgelegt werden. Dabei ist für Benzinmotoren die Luftmasse im Zylinder proportional zum erzeugbaren Drehmoment, da diese stets ein nahe-stöchiometrisches Kraftstoff-Luft Gemisch benötigen zur Verwendung eines 3-Wege Katalysators zur Abgasnachbehandlung. Somit muss die Luftmasse im Zylinder nunmehr über eine elektronisch oder elektromechanisch ansteuerbare Drosselklappe geregelt werden. Das Motorsteuergerät (Teil der Hubkolbenkraftmaschine) empfängt über einen Pedalwertgeber ein gewünschtes Drehmoment, aus dem eine für den momentanen Zustand der Hubkolbenkraftmaschine benötigte Kraftstoffmenge errechnet wird. Daraus wird die zur stöchiometrischen Verbrennung des Kraftstoffs nötige Luftmenge errechnet. Falls die über die Einlassventile verfügbare Luftmasse im momentanen Zustand der Hubkolbenkraftmaschine für den betreffenden Motorzyklus nicht verfügbar ist, sendet das Motorsteuergerät automatisch Befehle zur Aktivierung des jeweiligen Ladeventils, an die Drosselklappe(n) und an die jeweilige Kraftstoffeinspritzeinheit, so dass nach dem Schliessen des Ladeventils ein nahezu stöchiometrisches Verbrennungsgemisch erreicht wird. In Fall einer Kanaleinspritzung würde während der Öffnungsphase der Einlassventile ein sehr fettes Gemisch (also hoher Kraftstoffüberschuss) in den Zylinder eingebracht, und erst die zusätzliche Luft aus dem Drucklufttank sorgt für ein nahe-stöchiometrisches (oder zumindest brennbares) Gemisch.

Die Erfindung wird anhand der in den nachfolgenden Figuren gezeigten Ausführungsformen näher erläutert. Es zeigen:
- **Fig. 1**: eine Gesamtkonzept einer erfindungsgemässen Hubkolbenkraftmaschine;
- **Fig. 2**: ein Schema betreffend die Funktionsweise eines Motorsteuergerätes, sowie Sensoren und Aktuatoren;
- **Fig. 3**: Ein erstes Diagramm mit einem Bewegungsverlauf der Einlass-, der Auslass- und der Ladeventile;
- **Fig. 4**: Ein zweites Diagramm mit einem Bewegungsverlauf der Einlass-, der Auslass- und der Ladeventile;
- **Fig. 5**: Ein drittes Diagramm mit einem Bewegungsverlauf der Einlass-, der Auslass- und der Ladeventile;
- **Fig. 6**: Ein viertes Diagramm mit einem Bewegungsverlauf der Einlass-, der Auslass- und der Ladeventile.

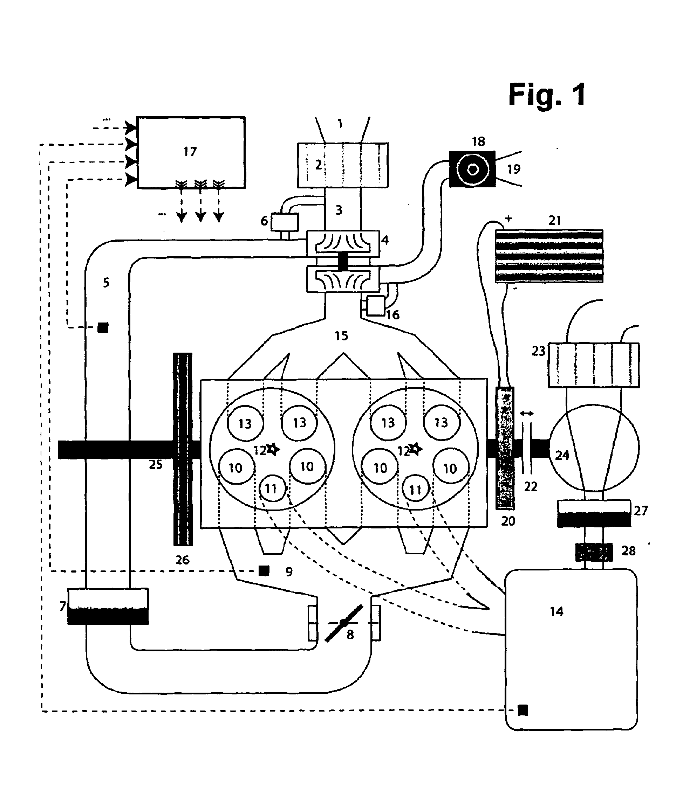

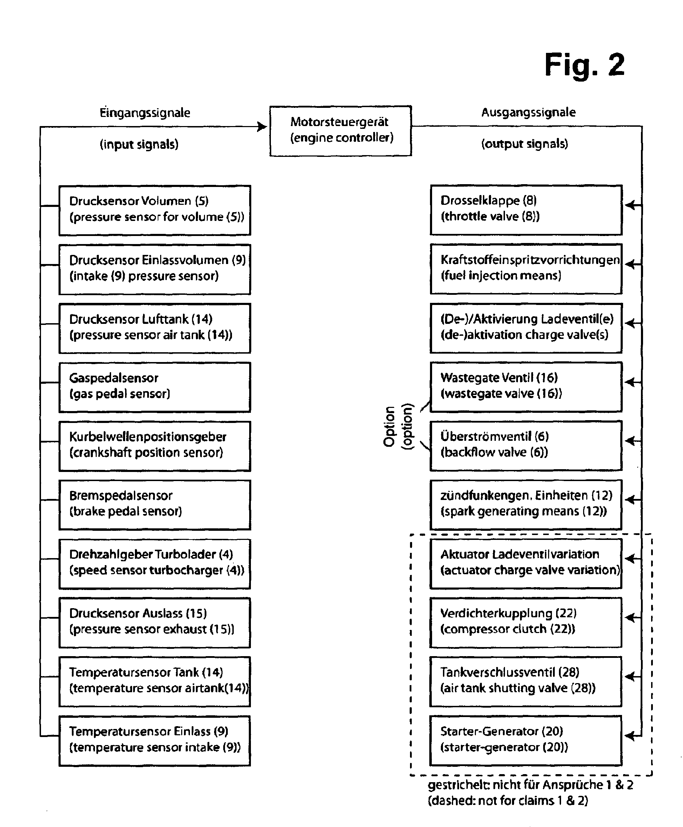

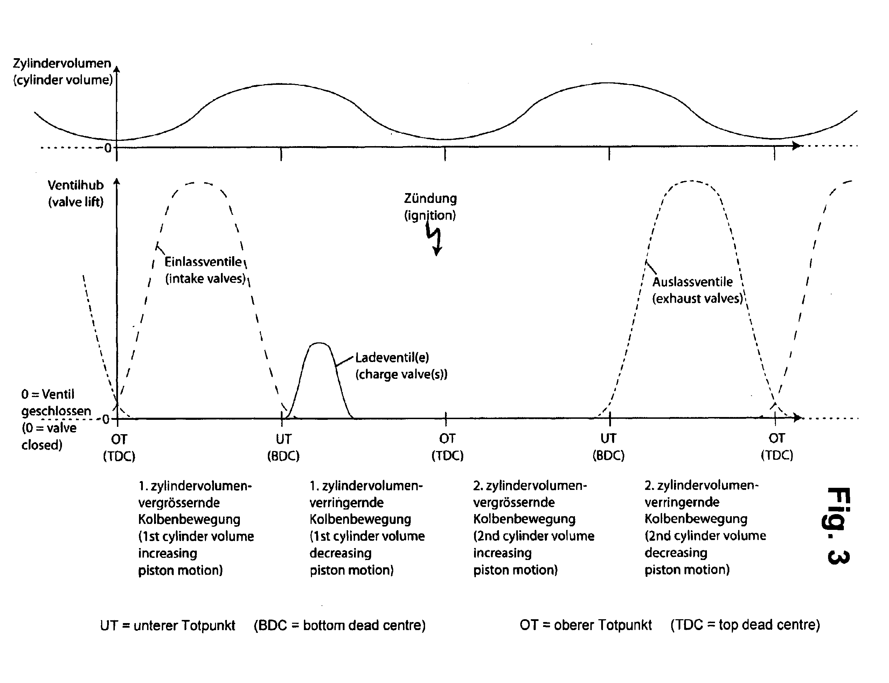

Das Gesamtkonzept einer erfindungsgemässen Hubkolbenkraftmaschine ist in **Fig. 1** dargestellt. Das zugehörige Motorsteuergerät mit Sensoren und Aktuatoren ist in **Fig. 2** dargestellt. Die nachfolgend beschriebenen Ausführungen unterscheiden sich im Wesentlichen in der Komplexität der Ventilsteuerung der Ladeventile. Diese Variabilität der Ladeventile für die verschiedenen Ausführungen sind in **Fig. 3**, **Fig. 4****,** **Fig. 5** und **Fig. 6** dargestellt.

**Ausführung 1 (****Fig. 3****):** Der Luftpfad verläuft wie folgt: Die Luft wird von der Umgebung (1) angesaugt und durch einen Luftfilter (2) gereinigt. Der fluiddynamische Kompressor des Turboladers (4) verdichtet die Luft und befördert sie in das nächste Volumen im Luftpfad (5). Falls das Druckverhältnis zwischen Volumen (5) und dem vor dem Kompressor (3) zu gross ist (was unter Berücksichtigung des Luftmassenstroms durch den Kompressor berechnet wird) wird das Überströmventil (6) dazu verwendet, einen bestimmten Luftmassenstrom zurück zum Volumen (3) zu leiten, wobei besagtes Überströmventil entweder mechanisch (druckdifferenzabhängig) funktioniert, oder aber vorzugsweise elektronisch über das Motorsteuergerät (17) angesteuert wird. Die vom Kompressor verdichtete Luft wird mit Hilfe eines Ladeluftkühlers (Luft-Wasser oder Luft-Luft) gekühlt um die Dichte der komprimierten Luft zu erhöhen. Die abgekühlte Luft wird durch eine elektronisch oder elektromechanisch ansteuerbare Drosselklappe (8) gedrosselt, so dass der Druck im nachfolgenden Einlassvolumen (9) im Regelfall niedriger oder gleich gross ist wie im Volumen vor der Drosselklappe. Dieser Teil des Luftpfades kann aufgeteilt sein in mehrere parallele Pfade mit möglicherweise mehreren Turboladern, Drosselklappen und Einlassvolumina. Die Einlassventile (10) werden über eine Nockenwelle angesteuert, so dass alle Einlassventile pro zwei Umdrehungen der Kurbelwelle (25) genau einen Öffnungs- und Schliessvorgang aufweisen. Die Einlassventile sind jeweils hauptsächlich während einer volumenvergrössernden Kolbenbewegung geöffnet. Die Hubkolbenkraftmaschine verfügt über Vorrichtungen zur zumessenden Einspritzung von Kraftstoff, vorzugsweise wird pro Zylinder eine solche Vorrichtung eingesetzt. Die Vorrichtungen befinden sich entweder in den Einlasskanälen oder sie sind so im Zylinderkopf platziert, dass sie den Kraftstoff direkt in die Brennkammern einspritzen können (nicht dargestellt). Falls die Hubkolbenkraftmaschine Benzin als Kraftstoff verwendet, verfügt jede Brennkammer über eine zündfunkengenerierende Einheit (12). Sämtliche Auslassventile (13) werden ebenfalls über eine Nockenwelle angetrieben, und zwar jedes Auslassventil je einmal pro zwei Umdrehungen der Kurbelwelle. Die Auslassventile verbinden die Brennkammern mit einem Auslassvolumen (15), das wiederum an die Turbine des Turboladers (4) angeschlossen ist, so dass der Enthalpiefluss durch die Turbine diese antreibt, die sich auf einer Welle mit dem Kompressor des Turboladers befindet. Der Turbolader kann über eine variable Turbinengeometrie verfügen (nicht dargestellt) oder über ein sogenanntes Wastegate (16), welches Gase an der Turbine vorbeileiten kann, sobald esmechanisch oder elektromechanisch - entsprechend angesteuert wird. Die Gase, die durch die Turbine und das Wastegate geströmt sind, werden durch einen Katalysator (18) geleitet (Benzinmotor: 3-Wege Katalysator) bevor sie in die Umgebung (19) hinausströmen. Der Abgaspfad kann wie der Einlassluftpfad parallel aufgeteilt sein mit mehreren Auslassvolumina und Turboladern. In Bremsphasen oder auch wenn das Motorsteuergerät (17) es anfordert, kann ein Verdichter (24) über eine elektronisch schaltbare Kupplung (22) mit der Kurbelwelle (25) verbunden werden. Der Verdichter saugt dabei Umgebungsluft über einen Filter (23) an und befördert die verdichtete Luft in den Drucklufttank (14). Die verdichtete Luft kann möglicherweise über eine Kühlvorrichtung (27) gekühlt werden. Ein Ventil (28) verhindert den Rückfluss von Luft aus dem Drucklufttank (14), der direkt mit den Brennkammern über die Ladeventile (11) verbunden ist. Die Ladeventile werden für diese Ausführungen über eine Nockenwelle angesteuert, die mechanisch so mit der Kurbelwelle verbunden ist, so dass die besagte Nockenwelle halb so schnell rotiert wie besagte Kurbelwelle. Die Nocken der besagten Nockenwelle treiben die Ladeventile derart an, dass die Ladeventile etwa zu Beginn der Kompression geöffnet werden, wenn die jeweiligen Einlassventile gerade geschlossen sind oder nahezu geschlossen sind. Die Ladeventile schließen sich jeweils während des jeweiligen Kompressionsvorgangs. Die mechanische Verbindung der Nockenwelle zu den Ladeventilen ist schnell deaktivierbar, d.h. maximal innerhalb 10 Umdrehungen der Kurbelwelle, die Aktivierungs- und Deaktivierungsvorgänge werden vom Motorsteuergerät (17) initiiert.

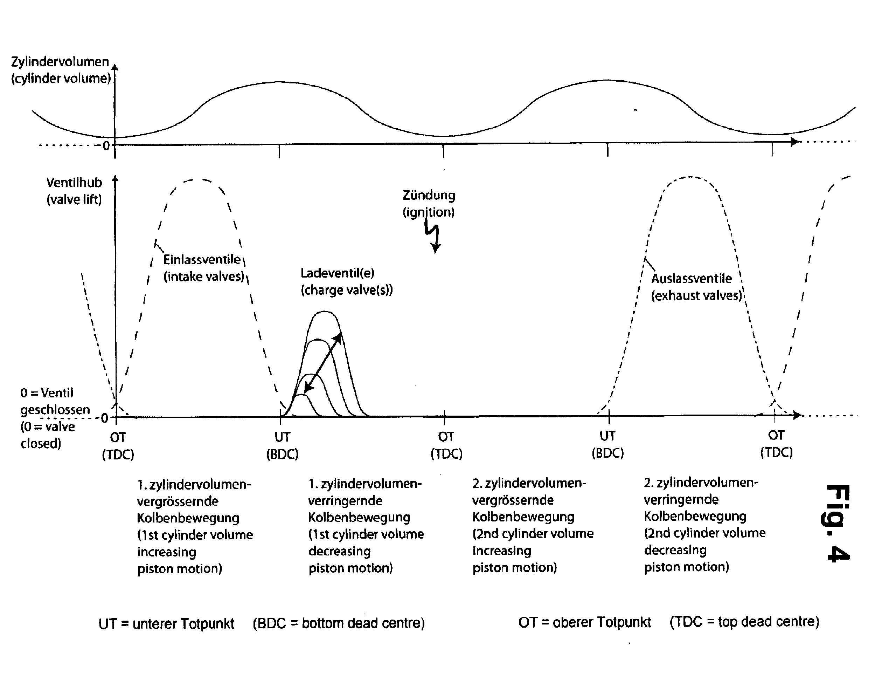

**Ausführung 2 (****Fig. 4****):** Diese Ausführung unterscheidet sich zu Ausführung 1 lediglich in der Variabilität der Ladeventilansteuerung. Hier kann die mechanische Verbindung der ladeventilansteuemden Nockenwellen und der Ladeventile nicht nur deaktiviert werden, sondern das Hubprofil der Ladeventile kann derart verändert werden, dass der Maximalhub der Ladeventile und die Hubdauer (bezogen auf die Kurbelwinkel differenz) verändert werden kann. Dies kann mit serienfähigen Technologien wie bspw. Valvetronic der Firma BMW AG realisiert werden. Der Öffnungszeitpunkt der Ladeventile bleibt vorzugsweise unverändert. Diese Ausführung erlaubt eine genauere Steuerung der Luftmasse, die sich vor Einleitung der Verbrennung in der Brennkammer befindet.

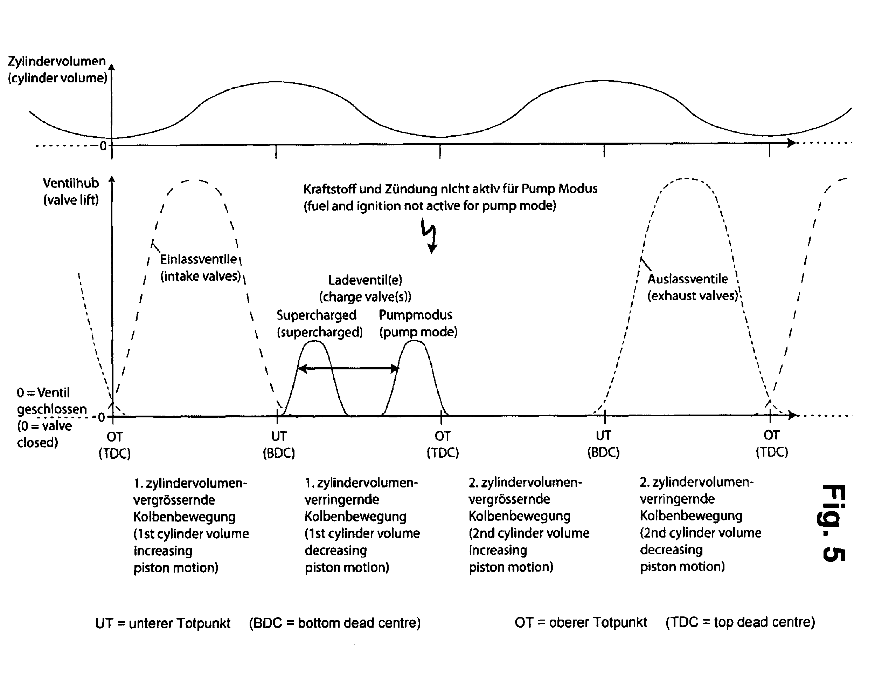

**Ausführung 3 (****Fig. 5****):** Diese Ausführung unterscheidet sich zu Ausführung 1 in der Variabilität der Ladeventilansteuerung und in dem Wegfallen des externen Verdichters (24) und seinen benötigten Komponenten (23), (27), (28) und (22). Hier kann im Vergleich zu Ausführung 1 die mechanische Verbindung der ladeventilansteuernden Nockenwellen und der Ladeventile nicht nur deaktiviert werden, sondern das Hubprofil der Ladeventile kann auch derart phasenverschoben werden, dass die Ladeventile gegen Ende des Kompressionstakts geöffnet sind. Dies wird gemacht, falls das Motorsteuergerät einen Bremswunsch des Fahrers registriert (bspw. Drücken eines Bremspedals). Für diesen Fall wird die Kraftstoffeinspritzung deaktiviert und die Drosselklappe voll geöffnet. So kann Luft in den angeschlossenen Drucklufttank gepumpt werden. Systeme zur Phasenverschiebung von nockenwellenbasierten Ventilsteuerungen sind in Serienfahrzeugen häufig anzutreffen (z.B. VANOS der Firma BMW AG).

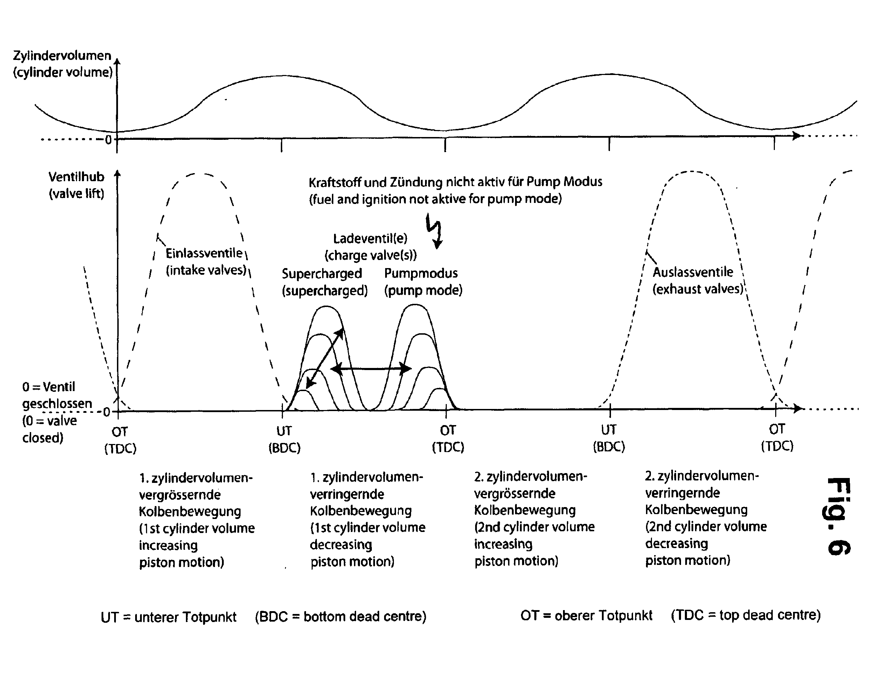

**Ausführung 4 (****Fig. 6****):** Diese Ausführung unterscheidet sich zu Ausführung 1 in der Variabilität der Ladeventilansteuerung und in dem Wegfallen des externen Verdichters (24) und seiner benötigten Komponenten (23), (27), (28) und (22). Hier kann im Vergleich zu Ausführung 1 die mechanische Verbindung der ladeventilansteuernden Nockenwellen und der Ladeventile nicht nur deaktiviert werden, sondern das Hubprofil der Ladeventile kann phasenverschoben werden, so dass die Ladeventile gegen Ende des Kompressionstakts geöffnet sind und das Hubprofil der Ladeventile kann derart verändert werden, dass der Maximalhub der Ladeventile und die Dauer des Hubes (bezogen auf die Kurbelwinkeldifferenz) verändert werden kann. Dies kann mit einer Kombination von serienfähigen Technologien wie bspw. Valvetronic und VANOS der Firma BMW AG realisiert werden. Diese Ausführung erlaubt eine genauere Steuerung der Luftmasse, die sich vor Einleitung der Verbrennung in der Brennkammer befindet ("supercharged" Modus) und eine genauere Steuerung des Pump Modus, bei dem die Einspritzung von Kraftstoff deaktiviert ist.

**Anmerkungen zu den Ausführungen:** Die Ausführungen 1 und 2 erlauben den "supercharged" Modus zusätzlich zum normalen Verbrennungsmotormodus, während eine Rückgewinnung von Energie, die beim Bremsen des Fahrzeugs frei wird mittels eines externen Kompressors bewerkstelligt werden kann. Ausführungen 3 und 4 benötigen keinen zusätzlichen Kompressor (hier ist er optional vorzusehen), da sie zusätzlich zum "supercharged" Modus auch noch einen Pump Modus auf Viertaktbasis darstellen können. Für den "supercharged Modus ist es wichtig, dass nicht heiße, sondern möglichst kalte Luft eingespritzt wird. Das kann dadurch erreicht werden, dass man den Tank aus Metall fertigt und für guten Wärmeübergang zur Umgebungsluft auslegt (große Oberflächen), zusätzlich kann die aus dem externen Kompressor austretende Luft noch gekühlt werden (ähnlich Ladeluftkühler wie im Ansaugtrakt). Zusätzlich sollte sichergestellt werden, dass das Ladeventil (bzw. das Volumen vor dem Ladeventil) nicht zu stark aufgeheizt wird. Somit bietet es sich für alle Ausführungen an, das Ladeventil in die Motorkühlung miteinzubeziehen (Wasserkühlung um das Volumen und/oder des Zufuhrkanals zum Ladeventil) oder man ordnet das Ladeventil zwischen zwei Einlassventilen an.

Die Erfindung kommt gänzlich ohne den Pneumatikmotor Modus aus. Der Pneumatikmotor Modus würde die Anforderungen an eine variable Ventilsteuerung derart erhöhen dass eine nockenwellenbasierte Lösung für alle Ventile nicht mehr bewerkstelligt werden könnte. Außerdem stellt die Verwendung des Pneumatikmotor Modus einen Nachteil dar wenn Einlassventile und Auslassventile nicht variabel angesteuert werden können, da ein Luftüberschuss im Abgastrakt, so wie er bei der Verwendung des Pneumatikmotor Modus auftritt, die Funktionstüchtigkeit eines 3-Wege Katalysators beeinträchtigen kann.

Da auf den pneumatischen Start der Hubkolbenkraftmaschine verzichtet werden muss, kommt eine andere Lösung in Betracht: Man kann auf die Kurbelwelle einen elektrischen Starter-Generator (20) setzen, wie er bereits in einigen Fahrzeugen serienmäßig eingebaut wird. Dieser Starter-Generator ersetzt einen kleinen konventionellen Starter und kann die Hubkolbenkraftmaschine so schnell vom Stillstand auf eine für die Verbrennung geeignete Drehzahl beschleunigen, dass anstelle eines Leerlaufbetriebs der Hubkolbenkraftmaschine der Motor abgestellt werden kann sobald das Fahrzeug zum Stillstand kommt. Ein solcher Starter-Generator ist mit der Fahrzeugbatterie (21) verbunden. Der Starter-Generator kann möglicherweise auch während des Fahrens ein zusätzliches positives Drehmoment auf den Antriebsstrang geben zur Motorunterstützung. Dies kann vor allem dazu verwendet werden, den Turbolochüberbrückungsvorgang sanfter zu gestalten (d.h. Drehmomentsprungsreduktion beim Aktivieren oder Deaktivieren des Ladeventils). Der Starter-Generator kann zudem kinetische Energie des Antriebsstrangs zu elektrischer Energie umwandeln (negatives Drehmoment an der Kurbelwelle). Dies ermöglicht die weitere Rekuperation von Energie die beim Bremsen des Fahrzeugs frei wird. Im Falle der Ausführungen 3 und 4 kann mit Hilfe des Pump Modus auf Viertaktbasis möglicherweise nicht die ganze beim Bremsen zur Verfügung stehende freiwerdende Energie rekuperiert werden, hier ist die elektrische Rekuperation eine gute Ergänzung. Die elektrisch gespeicherte Energie wird vorrangig zum Betreiben elektronischer Verbraucher im Fahrzeug verwendet. Zudem kann bei niedrigem Batteriestand die Batterie wieder aufgeladen werden, in dem die Hubkolbenkraftmaschine ein positives Drehmoment auf die Kurbelwelle gibt, so dass das überschüssige Drehmoment zur Erzeugung elektrischer Energie verwendet werden kann.

Der "supercharged" Modus ist regelungstechnisch sehr anspruchsvoll und erfordert oben beschriebene Sensor-/Motorsteuergerät-/Aktuatorarchitektur. Er wird zudem nur aktiviert, falls mit Hilfe des Lufttank-Drucksensorsignals vom Motorsteuergerät errechnet werden kann, dass der Tankdruck während der Öffnung des Ladeventils für den aktuellen Motorzyklus stets grösser sein wird als der Zylinderdruck und somit der Transfer von brennbarem Kraftstoff-Luft-Gemisch in den Drucklufttank verhindert werden kann. Diese Überprüfung kann beispielsweise durch den Einsatz von Zylinderdrucksensoren erfolgen. Bei einer Überbrückung des Turbolochs erhöht sich der Druck vor der Drosselklappe durch das Hochbeschleunigen des Turboladers, so dass die Drosselklappe die Druckdifferenz von Volumen (5) und dem Einlassvolumen (9) so regeln muss, dass sich nach dem Einblasen der Luft aus dem Drucktank die gewünschte Luftmasse befindet, die den Kraftstoff (bei nahe-stöchiometrischem Verhältnis) nahezu vollständig verbrennen kann um das vom Fahrer gewünschte Drehmoment zu produzieren. Sobald der Druck vor der Drosselklappe hoch genug ist um die Zylinder mit ausreichend Luft zu füllen, wird die Drosselklappe geöffnet und die Ladeventile werden wieder deaktiviert. Während der Turbolochüberbrückung kann es zu hohen Druckverhältnissen über dem Kompressor kommen, bei relativ niedrigen Luftmassenströmen (da ein Teil der benötigten Luft ja vom Drucktank kommt). Daher muss das Überströmventil so geregelt werden, dass der Kompressor nicht die Pumpgrenze überschreitet.

Prinzipiell ist die beschriebene Erfindung auch für Dieselmotoren ein Fortschritt. Hier ist das zu überbrückende Turboloch nicht so gross, aber trotzdem kann die Fahrbarkeit des Fahrzeugs verbessert werden. Beim Diesel ist die Luftmasse von untergeordneter Bedeutung, Dieselmotoren werden stets mager betrieben. Jedoch ermöglicht eine zusätzliche Drucklufteinblasung möglicherweise eine verminderte Entstehung von Ruß sowie eine höhere mögliche Einspritzmenge direkt nachdem der Fahrer das erhöhte Drehmoment verlangt. Dieselmotoren weisen keine zündfunkengenerierende Einheiten im Zylinderkopf auf, sie sind Selbstzünder. Ansonsten gilt die Beschreibung der Erfindung ebenso für Dieselmotoren.

In einer Ausführungsform betrifft die Erfindung eine Hubkolbenkraftmaschine mit mehreren Zylindern (zylindrische Brennkammern), deren Kolben mechanisch mit einer gemeinsamen Kurbelwelle (25) verbunden sind, aufweisend
a. je mindestens ein Einlassventil (10) pro Zylinder,
b. je mindestens ein Auslassventil (13) pro Zylinder,
c. ein, optional aufgeteiltes, Einlassvolumen (9), welches durch Öffnung der jeweiligen Einlassventile (10) mit dem jeweiligen Zylindervolumen verbunden werden kann,
d. ein, optional aufgeteiltes, Auslassvolumen (15), welches durch Öffnung der jeweiligen Auslassventile (15) mit dem jeweiligen Zylindervolumen verbunden werden kann,
e. mindestens eine Nockenwelle, derart mechanisch mit der Kurbelwelle und den Ein- und Auslassventilen (10,13) verbunden, dass die Ein- und Auslassventile pro zwei Hubzyklen des zugehörigen Zylinders je einmal geöffnet und geschlossen werden,
f. eine Vorrichtung zur zugemessenen Einspritzung von Kraftstoff in die Zylinder,
g. eine zündfunkengenerierende Einheit pro Zylinder,
h. mindestens eine fluiddynamische Vorrichtung (Turbolader, 4) zur Erhöhung des Drucks in einem Volumen (5) vor dem Einlassvolumen (9), angetrieben durch die Abgasenthalpie der Hubkolbenkraftmaschine,
i. eine Vorrichtung zur Kühlung der verdichteten Luft (7),
j. mindestens eine elektrisch oder elektromechanisch gesteuerte Drosselklappe (8), welche den Druck im Einlassvolumen (9) gegenüber dem Druck des vorher durchströmten Volumens (5) verringern kann
und dadurch gekennzeichnet, dass mindestens ein Zylinder zusätzlich noch mindestens ein Ladeventil (11) enthält, welches den zugehörigen Zylinder mit einem, optional aufgeteilten, Drucklufttank (14) verbindet und welches ebenfalls mit einer mit der Kurbelwelle mechanisch verbundenen Nockenwelle derart verbunden ist, dass es während zweier Hubzyklen des zugehörigen Zylinders dann geöffnet wird, wenn das zum Zylinder zugehörige Einlassventil im Schliessvorgang begriffen ist oder bereits geschlossen ist, und wieder geschlossen wird bevor der zugehörige Kolben die zylindervolumenverringernde Bewegung vollendet hat, und derart, dass das Ladeventil durch einen Mechanismus in seiner mechanischen Verbindung zur Kurbelwelle deaktiviert werden kann, so dass es während zweier oder mehrerer Hubzyklen geschlossen bleibt.

Die Hubkolbenkraftmaschine kann mit einem Motorsteuergerät (17) wirkverbunden sein, welches aus den Eingangsgrössen
- angefordertes Drehmoment,
- Luftdruck im Drucklufttank (14),
- Luftdruck im vor der Drosselklappe (8) befindlichen Volumen (5) und
- die, beispielsweise durch einen Kurbelwellenpositionsgeber ermittelten, erwarteten Öffnungszeiten der mit der Kurbelwelle mechanisch verbundenen Ventile
   oder aus davon abgeleiteten Grössen berechnet
- wie weit die Drosselklappe (8) geöffnet werden muss,
- ob die Ladeventile aktiviert werden müssen und
- wie viel Kraftstoff eingespritzt werden muss,
   so dass die entsprechende Menge eines stöchiometrischen oder nahe-stöchiometrischen Kraftstoff-Luft Gemisches entsteht, das bei Verbrennung das angeforderte Drehmoment produziert und welches
- die Drosselklappe (8),
- die jeweilige mechanische, deaktivierbare Verbindung des Ladeventils zur Kurbelwelle und
- die Vorrichtung zur zugemessenen Einspritzung von Kraftstoff in die Zylinder
entsprechend ansteuert.

Die Hubkolbenkraftmaschine kann, ferner ein vorzugsweise elektronisch steuerbares Überstromventil (6) an der fluiddynamischen Vorrichtung (Kompressor des Turboladers, 4) aufweisen, so dass verdichtete Luft bei einem zu hohen Druck im Volumen (5) vor dem Einlassvolumen (9) vor besagte fluiddynamische Vorrichtung (3) zurückfliessen kann.

Die Hubkolbenkraftmaschine kann zusätzlich über einen Verdichter (24) verfügen, welcher
a. über eine deaktivierbare Kupplung (22) mit der Kurbelwelle verbindbar ist,
b. an einem Ausgang mit dem Drucklufttank (14) verbunden ist.

Die Hubkolbenkraftmaschine kann ein schaltbares Ventil (28) aufweisen, welches den Drucklufttank (14) mit dem Verdichter (24) verbindet.

Die Hubkolbenkraftmaschine kann eine Kühlvorrichtung (27) zur Kühlung der vom Verdichter (24) verdichteten Luft aufweisen.

Die Hubkolbenkraftmaschine kann ein Ladeventil (11) mit einem veränderbaren Hubprofil aufweisen, wobei das Hubprofil durch Phasenverschiebung der Nockenwellen derart variiert werden kann, dass sich, je nach Einstellung der Variation, das Ladeventil entweder näher beim unteren Totpunkt des jeweiligen Zylinders geöffnet wird, so dass der Luftdruck im jeweiligen Zylinder während der Öffnungsdauer des Ladeventils geringer ist als im Drucklufttank, oder aber näher beim oberen Totpunkt des jeweiligen Zylinders im Schliessvorgang befindet, so dass der Luftdruck im jeweiligen Zylinder während der Öffnungsdauer des Ladeventils grösser ist als im Drucklufttank.

In einer Ausführungsform der Hubkolbenkraftmaschine kann das Hubprofil des Ladeventils (11) in Dauer und Maximalhub variiert werden kann, so dass die transferierte Luftmenge zwischen Zylinder und Tank eingestellt werden kann

In einer Ausführungsform der Hubkolbenkraftmaschine kann jeder Zylinder mit einem Ladeventil (11) mindestens zwei Einlassventile (10) besitzten, und das Ladeventil derart zwischen den Einlassventilen positioniert sein, so dass der thermische Einfluss der durch die Auslassventile (13) strömenden Gase auf die vor den Ladeventilen (11) befindliche Luft verringert ist.

In einer Ausführungsform der Hubkolbenkraftmaschine kann die zündfunkgenerierende Einheit (12) entfernt sein und Kraftstoff erst in der Nähe des oberen Totpunktes eingespritzt werden, wobei die Steuerung die angeforderten Luft und Kraftstoffmengen nicht auf einen Lamba- Wert von etwa 1 sondern auf einen Lambda-Wert von grösser als 1.1 ausgelegt ist.

In einer Ausführungsform umfasst die Erfindung ein Verfahren zum Betrieb einer Hubkolbenkraftmaschine welches folgenden Zyklus in mindestens einem Zylinder durchläuft:
a. Einsaugen von Frischluft oder Kraftstoff-Luft Gemisch während einer ersten zylindervolumenvergrössernden Kolbenbewegung,
b. Verdichten der im Zylinder befindlichen Gase während einer ersten zylindervolumenverringernden Kolbenbewegung,
c. Zündung des Kraftstoff-Luft-Gemisches in der Nähe des oberen Totpunktes nach dieser ersten zylindervolumenverringernden Kolbenbewegung,
d. Expansions- und Arbeitsphase des Zylinders, bei dem die in ihm befindlichen Gase verbrennen (zweite zylindervolumenvergrössernde Kolbenbewegung)
e. Ausstoss der verbrannten Gase in einer zweiten zylindervolumenverringernden Kolbenbewegung
und wobei in der Nähe des Anfangs der ersten zylindervolumenverringernden Kolbenbewegung das Ladeventil (11) geöffnet und zusätzliche Druckluft aus dem Drucklufttank (14) in den Zylinder eingeblasen wird und zuvor die Drosselklappe (8) und die Vorrichtung zur zugemessenen Einspritzung von Kraftstoff derart betätigt werden, dass ein nahe-stöchiometrisches Verbrennungsgemisch entsteht bevor nahe des oberen Totpunktes, also gegen Ende der ersten zylindervolumenverringernden Kolbenbewegung das Gemisch gezündet wird.

Beim Verfahren zum Betrieb der Hubkolbenkraftmaschine kann in der Nähe des oberen Totpunkts (c) nach der ersten zylindervolumenverringernden Kolbenbewegung (b) die Zündung des Kraftstoff-Luft-Gemisches durch Selbstzündung beim Einspritzen des Kraftstoffs erreicht werden, und Luft und Kraftstoff so bemessen werden, dass ein mageres Kraftstoff-Luftverhältnis (lambda>1.1) entsteht.

Beim Verfahren zum Betrieb der Hubkolbenkraftmaschine kann bei der ersten zylindervolumenvergrössernden Kolbenbewegung nur Frischluft, ohne Kraftstoff, in den Zylinder eingesaugt werden, und das Ladeventil (11) gegen Ende einer darauf folgenden zylindervolumenvergrössernden Kolbenbewegung geöffnet werden, wenn der Druck im Zylinder während dem grössten Teil der Öffnungsdauer des Ladeventils grösser ist als der Druck im Drucklufttank, so dass der Drucklufttank mit Luft geladen wird.

Beim Verfahren zum Betrieb der Hubkolbenkraftmaschine kann die Kupplung (22) eine Verbindung zwischen Verdichter (24) und Kurbelwelle (25) herstellt werden, wenn Kraftstoff in den Zylindern verbrannt wird.

Beim Verfahren zum Betrieb der Hubkolbenkraftmaschine kann die Kupplung (22) eine Verbindung zwischen Verdichter (24) und Kurbelwelle (25) herstellt werden, wenn kein Kraftstoff in den Zylindern verbrannt wird und der Verdichter (24) ein zur Bewegung der Kurbelwelle (25) entgegengesetztes Drehmoment auf die Kurbelwelle (25) generiert, wodurch die Kurbelwelle (25) abgebremst wird.

### Bezugszeichenliste

1. Einsaugtrakt Frischluft
2. Luftfilter (optional)
3. Volumen vor Kompressor
4. Turbolader
5. Volumen nach Kompressor
6. Überströmventil, ansteuerbar, kann auch nach dem Ladeluftkühler abgezweigt werden
7. Ladeluftkühler (Luft-Luft oder Luft-Wasser)
8. Drosselklappe (elektronisch angesteuert)
9. Einlassvolumen
10. Einlassventile
11. Ladeventile
12. zündfunkengenerierende Einheiten
13. Auslassventile
14. Drucklufttank
15. Auslassvolumen
16. Regeleinrichtung für Turbine (wastegate)
17. Motorsteuergerät
18. 3-Wege Katalysator
19. Auspuff
20. Elektrischer Starter-Generator
21. Batterie, die auch andere elektronische Bordsysteme speisen kann
22. Kupplung für externen Kompressor
23. Luftfilter für angesaugte Kompressorluft (optional)
24. externer mechanischer Kompressor
25. Kurbelwelle, zum Getriebe
26. Schwungrad
27. Kompressionsluftkühler (Luft-Luft oder Luft-Wasser)
28. Ventil (zur Verhinderung von Luftrückfluss aus Drucklufttank)
29. Zylinder = Brennkammer

## Patentansprüche

1. Hubkolbenkraftmaschine mit
a. mindestens einer Brennkammer mit
b. einem darin beweglich angeordneten Kolben, der mechanisch mit einer Kurbelwelle (25) wirkverbunden ist, und wobei
c. die mindestens eine Brennkammer, mindestens ein Einlassventil (10) und mindestens ein Auslassventil (13) aufweist, welche
d. über mindestens eine Nockenwelle derart mechanisch mit der Kurbelwelle wirkverbunden sind, dass die Ein- und Auslassventile (10, 13) pro zwei Hubzyklen des Kolbens je einmal geöffnet und geschlossen werden, sowie
e. mindestens eine fluiddynamische Vorrichtung (4), die zur Erhöhung eines Druckes in einem Einlassvolumen (9) vor der Brennkammer dient, welches mit der Brennkammer über mindestens ein Einlassventil (10) wirkverbunden ist, sowie
f. über eine Vorrichtung zur zugemessenen Kraftstoffeinspritzung, sowie
g. mindestens eine Drosselklappe (8), welche zur Beeinflussung des Druckes im Einlassvolumen (9) dient, wobei
h. die mindestens eine Brennkammer ein Ladeventil (11) aufweist, welches die Brennkammer direkt mit einem Drucklufttank (14) wirkverbindet,
**dadurch gekennzeichnet, dass**
i. das Ladeventil (11) über eine Nockenwelle mit der Kurbelwelle wirkverbunden ist, wobei
j. ein Aktivierungsmechanismus vorhanden ist, der zur Unterbrechung der mechanischen Wirkverbindung zwischen dem Ladeventil und der Kurbelwelle dient, so dass das Ladeventil (11) während mehrerer Hubzyklen geschlossen bleibt und wobei
k. die Wirkverbindung des Ladeventils (11) mit der Kurbelwelle (25) derart ausgestaltet ist, dass das Ladeventil (11) während zweier Hubzyklen des zugehörigen Kolbens dann geöffnet wird, wenn das Einlassventil (10) im Schliessvorgang begriffen ist oder bereits geschlossen ist und wieder geschlossen wird bevor der zugehörige Kolben die zylindervolumenverringernde Bewegung vollendet hat.

2. Die Hubkolbenkraftmaschine gemäss Patentanspruch 1, **dadurch gekennzeichnet, dass** ein Verdichter (24) zum Befüllen des Druckluftankes (14) vorhanden ist, der über eine Kupplung (22) mit der Kurbelwelle (25) wirkverbindbar ist.

3. Die Hubkolbenkraftmaschine gemäss Patentanspruch 1 oder 2, **dadurch gekennzeichnet, dass** die fluiddynamische Vorrichtung (4) ein Turbolader ist welcher durch die Abgasenthalpie der Hubkolbenkraftmaschine angetrieben wird.

4. Die Hubkolbenkraftmaschine gemäss einem der vorangehenden Patentansprüche, **dadurch gekennzeichnet, dass** eine zündfunkengenerierende Einheit (12) mit der Brennkammer wirkverbunden ist und die Hubkolbenkraftmaschine ein Motorsteuergerät (17) aufweist, welches aus einer Gruppe von folgenden Eingangsgrössen:
a. angefordertes Drehmoment,
b. Druck im Drucklufttank (14),
c. Druck in einem vor der Drosselklappe (8) befindlichen Volumen (5),
d. Öffnungszeiten der Ein- und Auslassventile (10, 13),
e. oder aus davon abgeleiteten Grössen berechnet:
f. wie weit die Drosselklappe (8) geöffnet werden muss,
g. ob die Ladeventile aktiviert werden müssen oder
h. wie viel Kraftstoff erforderlich ist.
so dass die entsprechende Menge eines stöchiometrischen oder nahe stöchiometrischen Kraftstoff-Luft Gemisches entsteht, das bei Verbrennung das angeforderte Drehmoment produziert und welches die Drosselklappe (8), die jeweilige mechanische, deaktivierbare Verbindung des Ladeventils zur Kurbelwelle und die Vorrichtung zur zugemessenen Einspritzung von Kraftstoff entsprechend ansteuert.

5. Die Hubkolbenkraftmaschine gemäss einem der Patentansprüche 1 bis 3, **dadurch gekennzeichnet, dass** der Kraftstoff in der Nähe des oberen Totpunktes eingespritzt wird und die Hubkolbenkraftmaschine ein Motorsteuergerät (17) aufweist, welches aus einer Gruppe von folgenden Eingangsgrössen:
a. angefordertes Drehmoment,
b. Druck im Drucklufttank (14),
c. Druck in einem vor der Drosselklappe (8) befindlichen Volumen (5),
d. Öffnungszeiten der Ein- und Auslassventile (10, 13),
e. oder aus davon abgeleiteten Grössen berechnet:
f. wie weit die Drosselklappe (8) geöffnet werden muss,
g. ob die Ladeventile aktiviert werden müssen oder
h. wie viel Kraftstoff erforderlich ist,
so dass die entsprechende Menge eines Kraftstoff-Luft Gemisches mit Lambda grösser als 1.1 entsteht, das bei der Verbrennung das angeforderte Drehmoment produziert und welches die Drosselklappe (8), die jeweilige mechanische, deaktivierbare Verbindung des Ladeventils zur Kurbelwelle und die Vorrichtung zur zugemessenen Einspritzung von Kraftstoff in die Zylinder entsprechend ansteuert.

6. Die Hubkolbenkraftmaschine gemäss einem der vorangehenden Patentansprüche, **ferner** aufweisend ein vorzugsweise elektronisch steuerbares Überstromventil (6) an der fluiddynamischen Vorrichtung, so dass verdichtete Luft bei einem zu hohen Druck im Volumen (5) vor dem Einlassvolumen (9) vor besagte fluiddynamische Vorrichtung (3) zurückfliessen kann

7. Die Hubkolbenkraftmaschine gemäss einem der vorhergehenden Patentansprüche, **dadurch gekennzeichnet, dass** das Hubprofil des Ladeventils (11) durch Phasenverschiebung der Nockenwellen derart variiert werden kann, dass sich, je nach Einstellung der Variation, das Ladeventil entweder näher beim unteren Totpunkt des jeweiligen Zylinders geöffnet wird, so dass der Luftdruck im jeweiligen Zylinder während der Öffnungsdauer des Ladeventils geringer ist als im Drucklufttank, oder aber näher beim oberen Totpunkt des jeweiligen Zylinders im Schliessvorgang befindet, so dass der Luftdruck im jeweiligen Zylinder während der Öffnungsdauer des Ladeventils grösser ist als im Drucklufttank.

8. Die Hubkolbenkraftmaschine gemäss einem der vorhergehenden Patentansprüche, **dadurch gekennzeichnet, dass** das Hubprofil des Ladeventils (11) in Dauer und Maximalhub variiert werden kann, so dass die transferierte Luftmenge zwischen Zylinder und Tank eingestellt werden kann.

9. Die Hubkolbenkraftmaschine gemäss einem der vorhergehenden Patentansprüche, **dadurch gekennzeichnet, dass** die Brennkammer ein Ladeventil (11) und mindestens zwei Einlassventile (10) aufweist, und dass das Ladeventil derart zwischen den Einlassventilen (10) positioniert ist, dass der thermische Einfluss der durch die Auslassventile (13) strömenden Gase auf die vor den Ladeventilen (11) befindliche Luft minimiert ist.

10. Verfahren zum Betrieb einer Hubkolbenkraftmaschine gemäss einem der vorangehenden Patentansprüche, welches Verfahren folgenden Zyklus in einer Brennkammer der Hubkolbenkraftmaschine durchläuft:
a. Einsaugen von Frischluft oder Kraftstoff-Luft Gemisch während einer ersten zylindervolumenvergrössernden Kolbenbewegung,
b. Verdichten der im Zylinder befindlichen Gase während einer ersten zylindervolumenverringernden Kolbenbewegung,
c. Zündung des Kraftstoff-Luft-Gemisches in der Nähe des oberen Totpur tes nach dieser ersten zylindervolumenverringernden Kolbenbewegung,
d. Expansions- und Arbeitsphase der Brennkammer, bei dem die in ihr befindlichen Gase während einer zweiten zylindervolumenvergrössernden Kolbenbewegung verbrennen,
e. Ausstoss der verbrannten Gase in einer zweiten zylindervolumenverringernden Kolbenbewegung;
**dadurch gekennzeichnet, dass**
f. durch Aktivieren des Aktivierungsmechanismus die mechanische Wirkverbindung zwischen dem Ladeventil (11) und der Kurbelwelle hergestellt wird, so dass
g. in der Nähe des Anfangs der ersten zylindervolumenverringernden Kolbenbewegung das Ladeventil (11) geöffnet und zusätzliche Druckluft direkt aus dem Drucklufttank (14) in die Brennkammer eingeblasen wird, wobei
h. zuvor die Drosselklappe (8) und die Vorrichtung zur zugemessenen Einspritzung von Kraftstoff durch das Motorsteuergerät derart betätigt werden, dass ein nahe stöchiometrisches Verbrennungsgemisch entsteht bevor nahe dem oberen Totpunkt des Kolbens das Kraftstoff-Luftgemisch im Brennraum gezündet wird.

11. Das Verfahren gemäss Patentanspruch 10, **wobei** in der Nähe des oberen Totpunkts (c) nach der ersten zylindervolumenverringernden Kolbenbewegung (b) die Zündung des Kraftstoff-Luft-Gemisches durch Selbstzündung beim Einspritzen des Kraftstoffs erreicht wird, und Luft und Kraftstoff so bemessen werden, dass ein mageres Kraftstoff-Luftverhältnis mit einem Lambda-Wert > 1.1 resultiert.

12. Das Verfahren gemäss einem der Ansprüche 10 oder 11, **dadurch gekennzeichnet, dass** bei einer ersten zylindervolumenvergrössernden Kolbenbewegung nur Frischluft, ohne Kraftstoff, in den Zylinder eingesaugt wird, und das Ladeventil (11) gegen Ende einer darauf folgenden zylindervolumenvergrössernden Kolbenbewegung geöffnet wird, wenn der Dru im Zylinder während dem grössten Teil der Öffnungsdauer des Ladeventils grösser ist als der Druck im Drucklufttank, so dass der Drucklufttank mit Luft geladen wird.

13. Das Verfahren gemäss einem der Ansprüche 10 bis 12, **dadurch gekennzeichnet, dass** die Kupplung (22) eine Verbindung zwischen Verdichter (24) und Kurbelwelle (25) herstellt, wenn Kraftstoff im Brennraum verbrannt wird.

14. Das Verfahren gemäss einem der Ansprüche 10 bis 13, **dadurch gekennzeichnet, dass** die Kupplung (22) eine Verbindung zwischen Verdichter (24) und Kurbelwelle (25) herstellt, wenn kein Kraftstoff in den Zylindern verbrannt wird und der Verdichter (24) ein zur Bewegung der Kurbelwelle (25) entgegen gesetztes Drehmoment auf die Kurbelwelle (25) generiert, wodurch die Kurbelwelle (25) abgebremst wird.

## Claims

1. Reciprocating piston engine having
a. at least one combustion chamber with
b. a piston which is arranged movably therein and is operatively connected mechanically to a crankshaft (25), and
c. the at least one combustion chamber having at least one inlet valve (10) and at least one outlet valve (13) which
d. are operatively connected mechanically to the crankshaft via at least one camshaft in such a way that the inlet and outlet valves (10, 13) are opened and closed in each case once per two reciprocating cycles of the piston, and
e. at least one fluid-dynamic device (4) which serves to increase a pressure in an inlet volume (9) upstream of the combustion chamber, which inlet volume (9) is operatively connected to the combustion chamber via at least one inlet valve (10), and
f. via a device for the metered injection of fuel, and
g. at least one throttle valve (8) which serves to influence the pressure in the inlet volume (9),
h. the at least one combustion chamber having a charging valve (11) which operatively directly connects the combustion chamber to a compressed air tank (14),
**characterized in that**
i. the charging valve (11) is operatively connected to the crankshaft via a camshaft,
j. there being an activation mechanism which serves to interrupt the mechanical operative connection between the charging valve and the crankshaft, with the result that the charging valve (11) remains closed during a plurality of reciprocating cycles, and
k. the operative connection of the charging valve (11) to the crankshaft (25) being configured in such a way that the charging valve (11) is opened during two reciprocating cycles of the associated piston when the inlet valve (10) is in the process of the closing operation or is already closed and is closed again before the associated piston has completed the movement which reduces the cylinder volume.

2. Reciprocating piston engine according to Patent Claim 1, **characterized in that** there is a compressor (24) for filling the compressed air tank (14), which compressor (24) can be operatively connected to the crankshaft (25) via a clutch (22).

3. Reciprocating piston engine according to Patent Claim 1 or 2, **characterized in that** the fluid-dynamic device (4) is a turbocharger which is driven by the exhaust gas enthalpy of the reciprocating piston engine.

4. Reciprocating piston engine according to one of the preceding patent claims, **characterized in that** an ignition spark generating unit (12) is operatively connected to the combustion chamber and the reciprocating piston engine has an engine control unit (17) which, from a group of the following input variables:
a. requested torque,
b. pressure in the compressed air tank (14),
c. pressure in a volume (5) which is situated upstream of the throttle valve (8),
d. opening times of the inlet and outlet valves (10, 13),
e. or from variables derived therefrom, calculates:
f. how far the throttle valve (8) has to be opened,
g. whether the charging valves have to be activated, or
h. how much fuel is required,
with the result that the corresponding quantity of a stoichiometric or near-stoichiometric fuel/air mixture is produced, which mixture produces the requested torque upon combustion, and which engine control unit (17) correspondingly actuates the throttle valve (8), the respective mechanical, deactivatable connection of the charging valve to the crankshaft and the device for the metered injection of fuel.

5. Reciprocating piston engine according to one of Patent Claims 1 to 3, **characterized in that** the fuel is injected close to the top dead centre, and the reciprocating piston engine has an engine control unit (17) which, from a group of the following input variables:
a. requested torque,
b. pressure in the compressed air tank (14),
c. pressure in a volume (5) which is situated upstream of the throttle valve (8),
d. opening times of the inlet and outlet valves (10, 13),
e. or from variables derived therefrom, calculates:
f. how far the throttle valve (8) has to be opened,
g. whether the charging valves have to be activated, or
h. how much fuel is required,
with the result that the corresponding quantity of a fuel/air mixture where lambda is greater than 1.1 is produced, which mixture produces the requested torque upon combustion, and which engine control unit (17) correspondingly actuates the throttle valve (8), the respective mechanical, deactivatable connection of the charging valve to the crankshaft and the device for the metered injection of fuel into the cylinders.

6. Reciprocating piston engine according to one of the preceding patent claims, furthermore having a preferably electronically controllable wastegate valve (6) on the fluid-dynamic device, with the result that, in the case of an excessively high pressure in the volume (5) upstream of the inlet volume (9), compressed air can flow back upstream of said fluid-dynamic device (3).

7. Reciprocating piston engine according to one of the preceding patent claims, **characterized in that** the lift profile of the charging valve (11) can be varied by phase shifting of the camshafts, in such a way that, depending on the setting of the variation, the charging valve is either opened closer to the bottom dead center of the respective cylinder, with the result that the air pressure in the respective cylinder during the opening duration of the charging valve is lower than in the compressed air tank, or, however, is situated closer to the top dead center of the respective cylinder in the closing operation, with the result that the air pressure in the respective cylinder during the opening duration of the charging valve is greater than in the compressed air tank.

8. Reciprocating piston engine according to one of the preceding patent claims, **characterized in that** the duration and maximum lift of the lift profile of the charging valve (11) can be varied, with the result that the transferred air quantity between the cylinder and the tank can be set.

9. Reciprocating piston engine according to one of the preceding patent claims, **characterized in that** the combustion chamber has a charging valve (11) and at least two inlet valves (10), and **in that** the charging valve is positioned between the inlet valves (10) in such a way that the thermal influence of the gases which flow through the outlet valves (13) on the air which is situated upstream of the charging valves (11) is minimized.

10. Method for operating a reciprocating piston engine according to one of the preceding patent claims, which method runs through the following cycle in a combustion chamber of the reciprocating piston engine:
a. intake of fresh air or fuel/air mixture during a first piston movement which increases the cylinder volume,
b. compression of the gases which are situated in the cylinder during a first piston movement which reduces the cylinder volume,
c. ignition of the fuel/air mixture close to the top dead centre after said first piston movement which reduces the cylinder volume,
d. expansion and work phase of the combustion chamber, in which the gases which are situated in said combustion chamber burn during a second piston movement which increases the cylinder volume,
e. ejection of the burned gases in a second piston movement which reduces the cylinder volume;
**characterized in that**
f. the mechanical operative connection between the charging valve (11) and the crankshaft is produced by activating the activation mechanism, with the result that
g. the charging valve (11) is opened close to the start of the first piston movement which reduces the cylinder volume, and additional compressed air is blown directly out of the compressed air tank (14) into the combustion chamber,
h. the throttle valve (8) and the device for the metered injection of fuel is previously actuated by the engine control unit in such a way that a near-stoichiometric combustion mixture is produced before the fuel/air mixture in the combustion chamber is ignited close to the top dead centre of the piston.

11. Method according to Patent Claim 10, the ignition of the fuel/air mixture being achieved by auto-ignition upon injection of the fuel close to the top dead centre (c) after the first piston movement (b) which reduces the cylinder volume, and air and fuel being metered such that a lean fuel/air ratio with a lambda value of > 1.1 results.

12. Method according to either of Claims 10 and 11, **characterized in that** only fresh air, without fuel, is sucked into the cylinder during a first piston movement which increases the cylinder volume, and the charging valve (11) is opened toward the end of a following piston movement which increases the cylinder volume, when the pressure in the cylinder during the majority of the opening duration of the charging valve is greater than the pressure in the compressed air tank, with the result that the compressed air tank is charged with air.

13. Method according to one of Claims 10 to 12, **characterized in that** the clutch (22) produces a connection between the compressor (24) and the crankshaft (25) when fuel is burned in the combustion chamber.

14. Method according to one of Claims 10 to 13, **characterized in that** the clutch (22) produces a connection between the compressor (24) and the crankshaft (25) when no fuel is burned in the cylinders and the compressor (24) generates a torque on the crankshaft (25), which torque is opposed to the movement of the crankshaft (25), as a result of which the crankshaft (25) is braked.

## Revendications

1. Moteur à piston alternatif comprenant
a. au moins une chambre de combustion avec
b. un piston disposé mobile à l'intérieur de celle-ci, lequel est en liaison fonctionnelle mécanique avec un vilebrequin (25), et où
c. l'au moins une chambre de combustion présente au moins une soupape d'admission (10) et au moins une soupape d'échappement (13), qui
d. sont en liaison fonctionnelle mécanique par le biais d'au moins un arbre à cames avec le vilebrequin, de telle sorte que les soupapes d'admission et d'échappement (10, 13), pour deux cycles de levage du piston, soient à chaque fois ouvertes et fermées une fois, et
e. au moins un dispositif à dynamique fluidique (4) qui sert à augmenter une pression dans un volume d'admission (9) en amont de la chambre de combustion, lequel est en liaison fonctionnelle avec la chambre de combustion par le biais d'au moins une soupape d'admission (10), et
f. par le biais d'un dispositif d'injection de carburant dosée, ainsi
g. qu'au moins un clapet d'étranglement (8) qui sert à influencer la pression dans le volume d'admission (9),
h. l'au moins une chambre de combustion présentant une soupape de charge (11) qui relie fonctionnellement la chambre de combustion directement à un réservoir d'air sous pression (14),
**caractérisé en ce que**
i. la soupape de charge (11) est en liaison fonctionnelle par le biais d'un arbre à cames avec le vilebrequin,
j. un mécanisme d'activation étant prévu, lequel sert à interrompre la liaison fonctionnelle mécanique entre la soupape de charge et le vilebrequin, de telle sorte que la soupape de charge (11) reste fermée pendant plusieurs cycles de levage, et
k. la liaison fonctionnelle de la soupape de charge (11) au vilebrequin (25) étant configurée de telle sorte que la soupape de charge (11) soit ouverte pendant deux cycles de levage du piston associé lorsque la soupape d'admission (10) est soumise à une opération de fermeture ou est déjà fermée et est à nouveau fermée avant que le piston associé n'ait terminé son mouvement réduisant le volume du cylindre.

2. Moteur à piston alternatif selon la revendication 1, **caractérisé en ce qu'**un compresseur (24) est prévu pour remplir le réservoir d'air sous pression (14), lequel compresseur peut être relié fonctionnellement par le biais d'un accouplement (22) au vilebrequin (25).

3. Moteur à piston alternatif selon la revendication 1 ou 2, **caractérisé en ce que** le dispositif à dynamique fluidique (4) est un turbocompresseur qui est entraîné par l'enthalpie des gaz d'échappement du moteur à piston alternatif.

4. Moteur à piston alternatif selon l'une quelconque des revendications précédentes, **caractérisé en ce qu'**une unité générant une étincelle d'allumage (12) est en liaison fonctionnelle avec la chambre de combustion et le moteur à piston alternatif présente un appareil de commande de moteur (17), qui calcule, à partir d'un groupe de grandeurs d'entrée suivantes :
a. couple demandé,
b. pression dans le réservoir d'air sous pression (14),
c. pression dans un volume (5) situé en amont du clapet d'étranglement (8),
d. temps d'ouverture des soupapes d'admission et d'échappement (10, 13),
e. ou à partir de grandeurs dérivées de celles-ci :
f. suivant quelle ampleur le clapet d'étranglement (8) doit être ouvert,
g. si les soupapes de charge doivent être activées ou
h. quelle quantité de carburant est requise,
de sorte que la quantité correspondante d'un mélange air-carburant stoechiométrique ou presque stoechiométrique soit obtenue, lequel mélange, lors de la combustion, produit le couple requis et lequel commande de manière correspondante le clapet d'étranglement (8), la liaison respective mécanique désactivable de la soupape de charge au vilebrequin et le dispositif d'injection dosée de carburant.

5. Moteur à piston alternatif selon l'une quelconque des revendications 1 à 3, **caractérisé en ce que** le carburant est injecté à proximité du point mort haut et le moteur à piston alternatif présente un appareil de commande du moteur (17) qui calcule, à partir d'un groupe de grandeurs d'entrée suivantes :
a. couple demandé,
b. pression dans le réservoir d'air sous pression (14),
c. pression dans un volume (5) situé en amont du clapet d'étranglement (8),
d. temps d'ouverture des soupapes d'admission et d'échappement (10, 13),
e. ou à partir de grandeurs dérivées de celles-ci :
f. suivant quelle ampleur le clapet d'étranglement (8) doit être ouvert,
g. si les soupapes de charge doivent être activées ou
h. quelle quantité de carburant est requise,
de sorte que la quantité correspondante d'un mélange air-carburant soit obtenue avec lambda supérieur à 1.1, lequel mélange, lors de la combustion, produit le couple requis et lequel commande de manière correspondante le clapet d'étranglement (8), la liaison respective mécanique désactivable de la soupape de charge au vilebrequin et le dispositif d'injection dosée de carburant dans les cylindres.

6. Moteur à piston alternatif selon l'une quelconque des revendications précédentes, présentant en outre une soupape de trop-plein (6) de préférence commandable électroniquement au niveau du dispositif à dynamique fluidique, de telle sorte que de l'air comprimé puisse refluer dans le cas d'une pression trop élevée dans le volume (5) en amont du volume d'admission (9) en amont dudit dispositif à dynamique fluidique (3).

7. Moteur à piston alternatif selon l'une quelconque des revendications précédentes, **caractérisé en ce que** le profil de levage de la soupape de charge (11) peut être modifié par des déphasages de l'arbre à cames, de telle sorte qu'en fonction du réglage de la variation, la soupape de charge soit ouverte plus près du point mort bas du cylindre respectif, de telle sorte que la pression d'air dans le cylindre respectif soit inférieure à celle dans le réservoir d'air sous pression pendant la durée d'ouverture de la soupape de charge, ou bien se trouve plus près du point mort haut du cylindre respectif pendant l'opération de fermeture, de sorte que la pression d'air dans le cylindre respectif soit supérieure à celle dans le réservoir d'air sous pression pendant la durée d'ouverture de la soupape de charge.

8. Moteur à piston alternatif selon l'une quelconque des revendications précédentes, **caractérisé en ce que** le profil de levage de la soupape de charge (11) peut être modifié en termes de durée et de course maximale, de telle sorte que la quantité d'air transférée entre le cylindre et le réservoir puisse être ajustée.

9. Moteur à piston alternatif selon l'une quelconque des revendications précédentes, **caractérisé en ce que** la chambre de combustion présente une soupape de charge (11) et au moins deux soupapes d'admission (10), et **en ce que** la soupape de charge est positionnée entre les soupapes d'admission (10) de telle sorte que l'influence thermique des gaz s'écoulant à travers les soupapes d'échappement (13) sur l'air se trouvant avant les soupapes de charge (11) soit minimisée.

10. Procédé pour faire fonctionner un moteur à piston alternatif selon l'une quelconque des revendications précédentes, lequel procédé exécute le cycle suivant dans une chambre de combustion du moteur à piston alternatif :
a. admission d'air frais ou d'un mélange air-carburant pendant un premier déplacement du piston augmentant le volume du cylindre,
b. compression des gaz se trouvant dans le cylindre pendant un premier déplacement du piston réduisant le volume du cylindre,
c. allumage du mélange air-carburant à proximité du point mort haut après ce premier déplacement du piston réduisant le volume du cylindre,
d. phase d'expansion et de travail de la chambre de combustion, au cours de laquelle les gaz se trouvant dans celle-ci brûlent pendant un deuxième déplacement du piston augmentant le volume du cylindre,
e. éjection des gaz brûlés dans un deuxième déplacement du piston réduisant le volume du cylindre ;
**caractérisé en ce que**
f. la liaison fonctionnelle mécanique entre la soupape de charge (11) et le vilebrequin est établie par activation du mécanisme d'activation, de telle sorte que
g. la soupape de charge (11) soit ouverte à proximité du début du premier déplacement du piston réduisant le volume du cylindre et que de l'air sous pression supplémentaire soit introduit directement depuis le réservoir d'air sous pression (14) dans la chambre de combustion,
h. le clapet d'étranglement (8) et le dispositif d'injection dosée de carburant étant activés préalablement par l'appareil de commande du moteur, de telle sorte qu'un mélange de combustion presque stoechiométrique soit produit avant que le mélange air-carburant ne soit allumé dans la chambre de combustion à proximité du point mort haut du piston.

11. Procédé selon la revendication 10, dans lequel à proximité du point mort haut (c) après le premier déplacement du piston réduisant le volume du cylindre (b), l'allumage du mélange air-carburant est réalisé par auto-allumage lors de l'injection du carburant, et de l'air et du carburant sont dosés de telle sorte qu'il en résulte un rapport air-carburant pauvre avec une valeur lambda > 1,1.

12. Procédé selon l'une quelconque des revendications 10 ou 11, **caractérisé en ce que** dans le cas d'un premier déplacement du piston augmentant le volume du cylindre, seul de l'air frais, sans carburant, est aspiré dans le cylindre, et la soupape de charge (11) est ouverte vers la fin d'un déplacement du piston suivant augmentant le volume du cylindre, lorsque la pression dans le cylindre est supérieure à la pression dans le réservoir d'air sous pression pendant la majeure partie de la durée d'ouverture de la soupape de charge, de telle sorte que le réservoir d'air sous pression soit alimenté en air.

13. Procédé selon l'une quelconque des revendications 10 à 12, **caractérisé en ce que** l'accouplement (22) établit une liaison entre le compresseur (24) et le vilebrequin (25), lorsque du carburant est brûlé dans la chambre de combustion.

14. Procédé selon l'une quelconque des revendications 10 à 13, **caractérisé en ce que** l'accouplement (22) établit une liaison entre le compresseur (24) et le vilebrequin (25), lorsque du carburant n'est pas brûlé dans les cylindres, et le compresseur (24) produit sur le vilebrequin (25) un couple opposé au déplacement du vilebrequin (25) de telle sorte que le vilebrequin (25) soit freiné.
